# EUROPEAN PATENT SPECIFICATION

(11) **EP 3 827 499 B1**
(45) Date of publication and mention of the grant of the patent: **25.03.2026**
(21) Application number: 19755682.2
(22) Date of filing: 23.07.2019
(51) Int. Cl.: H02K 1/14

(54) **PROCESS FOR PRODUCING FERROMAGNETIC CORES OF ELECTRIC MOTORS AND SO- MANUFACTURED FERROMAGNETIC CORES**
VERFAHREN ZUR HERSTELLUNG VON FERROMAGNETISCHEN KERNEN VON ELEKTROMOTOREN UND SO HERGESTELLTE FERROMAGNETISCHE KERNE
PROCÉDÉ DE FABRICATION DE NOYAUX FERROMAGNÉTIQUES DE MOTEURS ÉLECTRIQUES ET NOYAUX FERROMAGNÉTIQUES AINSI FABRIQUÉS

(30) Priority: 24.07.2018 IT 201800007470
(43) Date of publication of application: 02.06.2021
(73) Proprietor: Ernesto Malvestiti S.p.A., 20092 Cinisello Balsamo (IT)
(72) Inventor: VERDINO, Lino, 20092 Cinisello Balsamo (MI) (IT); MALVESTITI, Alberto, 20092 Cinisello Balsamo (MI) (IT)
(74) Representative: Valentini, Giuliano
(86) International application number: PCT/IB2019/056290
(87) International publication number: WO 2020/021453

(56) References cited:
- JP-A- 2015 223 060
- JP-A- 2016 077 154
- US-A1- 2010 066 193
- US-A1- 2017 117 761

## Description

### Field of the invention

The present invention concerns a process for producing ferromagnetic cores of electric motors constituted by bundles of laminations and, especially, ferromagnetic cores consisting of a plurality of bundles made in the form of segments mechanically separated and connected from/to each other.

### Background of the Invention

The ferromagnetic cores of electric motors by stacking a plurality of metal laminations are known in the art. In particular, the cylindrical cores of the stators and rotors of such motors are made by blanking laminations of substantially annular shape from a foil of ferromagnetic material and thus by bundling an appropriate number of laminations in order to achieve a core of desired axial length.

In particular, especially as far as the stator cores are concerned, it is also known in the art to make the core in the form of a plurality of segments that are formed according to a closed circular configuration and thus brought to assume an open rectilinear configuration in order to facilitate the winding of the coils around the respective polar expansions. Once the windings have been carried out, the rectilinear configuration must be able to be foldable in order to assume the closed circular shape so that to be inserted in the shell or cylindrical housing of the electric motor.

The patent application EP-A1-2309621 describes for example a method of forming a ferromagnetic stator core for electric motors formed by a plurality of laminated segments that are blanked from a foil in order to form laminations arranged in a circular configuration or, in other words, with a "closed-chain" configuration. Each of the laminated segments generally has the shape of an arc of a circle with polar expansion projecting inwards and a yoke base arranged outside with respect to the central axis of the ferromagnetic core. The laminations of each laminated segment are joined together by crimpings. Moreover, each of the laminations is provided with an embossed pin obtained by means of a punch acting on one end of each of the yoke bases, which is in turn engaged in the hollow formed by the punch itself at an underlying lamination; instead, at the opposite end of the yoke base, there is provided a concave portion which allows the lamination of the adjacent segment to be engaged with the hollow of the underlying lamination. A hinge, extending substantially along the whole axial length of the core, is thus obtained to allow the reciprocal rotation between adjacent segments, with the aim of facilitating the successive step of winding the conductor coils around the polar expansions of the segments after having brought them in rectilinear configuration.

However, the coupling of the pin of a lamination with the hollow of an underlying lamination is an interference coupling, i.e. the same type of coupling that occurs between the crimpings and the respective hollows in order to fix each lamination to an underlying or overlying lamination. The hinge obtained with a similar type of coupling along the whole axial length of the core can make the rotation between the segments difficult, especially if the segments have long length.

Moreover, the punching of the pins on all of the lamination layers composing the segments can involve a reduction in productivity and can lead to the rapid wearing of the punches and respective dies.

US2010/066193 describes a stator core formed by several laminated segments joined together according to a closed circular configuration. Each of the laminated segments generally has the shape of an arc of circle with polar expansion projecting inwards and a yoke base arranged outside with respect to the central axis of the stator core. The laminated segments are all joined together in a closed-chain configuration and cannot thus be brought to an open rectilinear configuration. However, each segment can slightly rotate and translate with respect to an adjacent segment to move away the polar expansions of the adjacent segments with respect to the polar expansion of a segment on which the conductors must be wound.

This document does not describe a process for producing a similar stator core in depth, but expressly specifies that:
- the segments comprising the yoke base and the polar expansion are formed one by one;
- the single segments comprising the yoke base and the polar expansion form the circular configuration only from the moment they are assembled;
- each segment is shaped by a given number of laminations, especially twelve laminations in the examples described, connected to each other by means of crimpings in the direction of the thickness in order to form each single segment comprising the yoke base and the polar expansion.

It is thus clear that the production of a similar stator core requires a blanking and connecting step of the laminations to form the single segments, and a separate assembling step of the single segments to form the final closed-chain configuration. Other documents which teach how to make stator cores formed by single separate segments successively assembled together are for example US2017/117761, JP2015-223060 and JP2016-077154.

### Summary of the invention

That being stated, the general object of the present invention is to provide a process for producing a ferromagnetic core for electric motors formed by a plurality of segments that allows to overcome the limits of the known art.

A particular object of the present invention is to provide a process that allows to produce a ferromagnetic core for electric motors in which the segments can rotate easily with respect to each other in order to be brought from the closed circular condition to the open rectilinear one, and vice-versa.

A further particular object of the present invention is to provide a process of the type identified above that allows to make a ferromagnetic core with segments of reduced magnetic reluctance compared to the known art.

These and further objects are achieved by the present invention, which is defined by a process according to claim 1 for producing a ferromagnetic core for electric motors formed by a plurality of segments. Further peculiar characteristics of the present invention are set forth in the respective dependent claims.

The process object of the present invention involves the production of a ferromagnetic core for electric motors formed by a plurality of laminated segments constituted by bundled laminations, the laminated segments being joined together in closed circular configuration during the blanking of each lamination layer. Each of the laminated segments generally has the shape of an arc of a circle with polar expansion projecting inwards and a yoke base arranged outside with respect to the central axis of the ferromagnetic core. The laminations of each laminated segment are joined together by means of crimpings to form a compact bundle of laminations and at least part of the laminated segments is joined with an adjacent segment along the yoke bases with the possibility of reciprocal rotation. The only separated segments are the first one and the last one of the closed circular configuration.

The process comprises the steps of:
a) feeding a foil of ferromagnetic material along blanking stations and stamping stations of a blanking/stamping device;
b) forming one or more crimpings and corresponding hollows by punching at the laminations of each segment;
c) blanking an initial layer of laminations in the closed circular configuration of the ferromagnetic core and pushing it into an accumulation chamber of the blanking die of the blanking/stamping device;
d) blanking a plurality of intermediate layers of laminations in the closed circular configuration of the ferromagnetic core and stacking each of the blanked intermediate layers onto an underlying lamination layer in the accumulation chamber of the blanking die of the blanking/stamping device by coupling the protruding crimpings of each intermediate layer of laminations with the corresponding hollows of an underlying lamination layer,
e) blanking a terminal layer of laminations in the closed circular configuration of the ferromagnetic core and pushing it into the accumulation chamber of the blanking die of the blanking/stamping device by coupling the protruding crimpings of the terminal layer of laminations with the corresponding hollows of an underlying lamination layer.

The lamination layers forming each of the laminated segments arranged in closed circular configuration have a concave portion at one end of the yoke base of each segment and a convex portion at the other end of the yoke base of each segment. The concave portion and the convex portion have mutually complementary shapes and sizes.

The process according to the present invention further comprises the steps of:
f) embossing a pin near the convex portion at one end of the yoke base of the laminations that form each of the laminated segments in at least one first auxiliary layer of laminations;
g) further blanking a concave portion at the end opposite to the yoke base of the laminations that form each of the laminated segments in the first auxiliary layer of laminations; and
h) blanking an opening near the convex portion at one end of the yoke base of the laminations that form each of the laminated segments in at least one second auxiliary layer of laminations.

The first auxiliary layer and the second auxiliary layer are consecutive layers in the bundle of laminations that form each of the laminated segments of the core, and the pins of the first auxiliary layer of laminations are engaged in the openings of the second auxiliary layer of laminations.

Moreover, only one couple of auxiliary layers is thus sufficient to form ferromagnetic core segments that are able to reciprocally rotate with respect to the pins formed in the first auxiliary layer in each of the segments.

The openings formed in the second auxiliary layer of laminations consist of slots. This advantageously allows to also achieve a slight translation between the segments, so that to facilitate the change between the closed circular configuration of the segments and the open rectilinear one, and vice-versa.

In a possible embodiment of the process, the first auxiliary layer of laminations and the second auxiliary layer of laminations are arranged between intermediate layers of laminations of the ferromagnetic core formed by a plurality of laminated segments arranged in closed circular configuration.

In a further embodiment of the process, the first auxiliary layer of laminations is arranged as initial layer and the second auxiliary layer of laminations is coupled to an intermediate layer of laminations being immediately above in the ferromagnetic core formed by a plurality of laminated segments arranged in closed circular configuration.

In a further embodiment of the process, the first auxiliary layer of laminations is arranged as terminal layer and the second auxiliary layer of laminations is coupled to an intermediate layer of laminations being immediately below in the ferromagnetic core formed by a plurality of laminated segments arranged in closed circular configuration.

In other embodiments of the process, a plurality of first auxiliary layers coupled to a corresponding number of second auxiliary layers is formed. Each of the first auxiliary layers and the second auxiliary layers is coupled to one of the intermediate layers of laminations, or to the initial layer of laminations, or else to the terminal layer of laminations.

A ferromagnetic core (not part of the invention) for electric motor formed by a plurality of laminated segments constituted by bundled laminations is further provided, the laminated segments being joined together in closed circular configuration during the blanking of each lamination layer, wherein each of the laminated segments generally has the shape of an arc of a circle with a polar expansion projecting inwards and a yoke base arranged outside with respect to the central axis of the ferromagnetic core. The laminations of each laminated segment are joined together by means of crimpings and at least part of the laminated segments is joined with an adjacent segment along the yoke bases with the possibility of reciprocal rotation. The ferromagnetic core comprises an initial layer of laminations, a plurality of intermediate layers of laminations and a terminal layer of laminations stacked together to form a plurality of laminated segments in the closed circular configuration of the ferromagnetic core.

The lamination layers forming each of the laminated segments arranged in closed circular configuration have a concave portion at one end of the yoke base of each segment and a convex portion at the other end of the yoke base of each segment; the concave portion and the convex portion have mutually complementary shapes and sizes. The ferromagnetic core comprises a first auxiliary layer of laminations having a projecting pin near the convex portion at one end of the yoke base of the laminations that form each of the laminated segments and a concave portion at the opposite end of the yoke base of the laminations that form each of the laminated segments in the first auxiliary layer of laminations, and a second auxiliary layer of laminations having an opening near the convex portion at one end of the yoke base of the laminations that form each of the laminated segments. The first auxiliary layer and the second auxiliary layer are consecutive layers in the bundle of laminations that form each of the laminated segments of the core and the pins of the first auxiliary layer of laminations are engaged in the openings of the second auxiliary layer of laminations.

The openings formed in the second auxiliary layer of laminations advantageously consist of slots.

In an embodiment of the ferromagnetic core, the first auxiliary layer of laminations and the second auxiliary layer of laminations are arranged between intermediate layers of laminations of the ferromagnetic core formed by a plurality of laminated segments arranged in closed circular configuration.

In a further embodiment of the ferromagnetic core, the first auxiliary layer of laminations is the initial layer and the second auxiliary layer of laminations is coupled to an intermediate layer of laminations being immediately above in the ferromagnetic core formed by a plurality of laminated segments arranged in closed circular configuration.

In a further embodiment of the ferromagnetic core, the first auxiliary layer of laminations is the terminal layer of laminations and the second auxiliary layer of laminations is coupled to an intermediate layer of laminations being immediately below in the ferromagnetic core formed by a plurality of laminated segments arranged in closed circular configuration.

In other possible embodiments of the ferromagnetic core, a plurality of first auxiliary layers coupled to a corresponding number of second auxiliary layers is arranged. Each of the first auxiliary layers and the second auxiliary layers can be coupled to one of the intermediate layers of laminations, or to the initial layer of laminations, or else to the terminal layer of laminations.

The ferromagnetic core is the stator core of an electric motor.

### Brief description of the drawings

Further features and advantages of the present invention will become clearer in the following description made by way of example and without limitations, with reference to the accompanying schematic drawings, in which:
- Figure 1 is a plan view of a ferromagnetic core for electric motor according to a possible embodiment of the present invention;
- Figure 2 is a view showing the types of laminations that form the initial layer of the bundle of the ferromagnetic core of Figure 1 in a condition of rectilinear alignment;
- Figures 2A, 2B, 2C and 2D show some details of the laminations of Figure 2;
- Figure 3 is a view showing the types of laminations that form the second layer of the bundle of the ferromagnetic core of Figure 1 in a condition of rectilinear alignment;
- Figures 3A, 3B, 3C and 3D show some details of the laminations of Figure 3;
- Figure 4 is a view showing the types of laminations that form the intermediate layers of the bundle of the ferromagnetic core of Figure 1 in a condition of rectilinear alignment;
- Figure 5 is a view showing the types of laminations that form the second-to-last layer of the bundle of the ferromagnetic core of Figure 1 in a condition of rectilinear alignment;
- Figure 6 is a view showing the types of laminations that form the terminal layer of the bundle of the ferromagnetic core of Figure 1 in a condition of rectilinear alignment;
- Figures 6A, 6B, 6C and 6D show some details of the laminations of Figure 6;
- Figures 7A, 7B and 7C are bottom plan views of some details of the ferromagnetic core of Figure 1;
- Figures 8A, 8B and 8C are sectional views of Figures 7A, 7B and 7C;
- Figures 9A, 9B and 9C are top plan views of some details of the ferromagnetic core of Figure 1;
- Figures 10A, 10B and 10C are sectional views of Figures 9A, 9B and 9C;
- Figure 11 is a schematic view showing the first steps of the sequence for producing a ferromagnetic core according to the present invention in some stations of a blanking/stamping device;
- Figures 11A, 11B, 11C and 11D show some details related to the sequence of Figure 11;
- Figure 12 is a schematic view showing some successive steps of the sequence for producing a ferromagnetic core according to the present invention in some stations of a blanking/stamping device;
- Figures 12A and 12B show some details related to the sequence of Figure 12;
- Figure 13 is a schematic view showing some successive steps of the sequence for producing a ferromagnetic core according to the present invention in some stations of a blanking/stamping device;
- Figures 13A, 13B, 13C, 13D and 13E show some details related to the sequence of Figure 13;
- Figure 14 is a schematic view showing the final steps of the sequence for producing a ferromagnetic core according to the present invention in some stations of a blanking/stamping device;
- Figure 15 is a schematic view similar to that of Figure 14 which shows an embodiment of a process according to the present invention in a further possible blanking/stamping device;
- Figure 16 is a schematic view showing a further embodiment of a process according to the present invention; and
- Figures 17-20 are schematic sectional views of further embodiments of a ferromagnetic core not part of the present invention.

### Modes for carrying out the invention

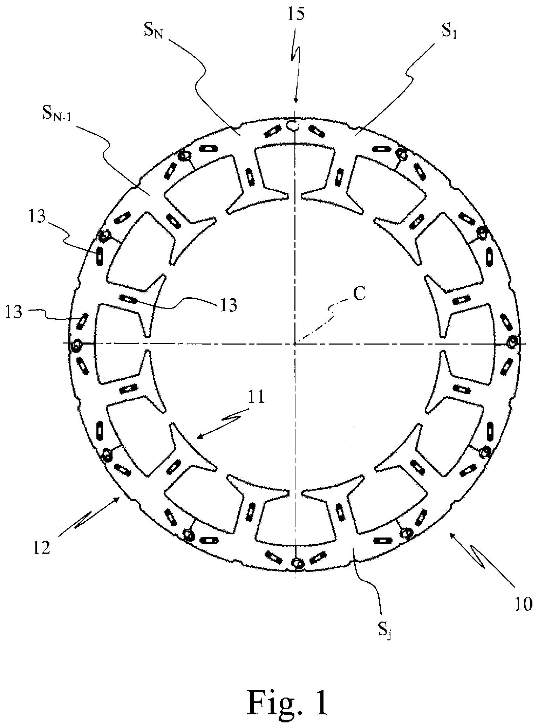

A ferromagnetic core 10 made by the process of the present invention is depicted in Figure 1, and especially, a ferromagnetic stator core for electric motor. The ferromagnetic core provides a plurality of laminated segments S₁...Sᵢ...S_{N} joined together with the possibility of rotation in order to be able to switch from a closed circular configuration to an open rectilinear configuration, and vice-versa. Only the segments S1 and SN are simply placed next to each other at the junction 15 along end portions having complementary shape.

Each of the laminated segments S₁...Sᵢ...S_{N} generally has the shape of an arc of a circle with a polar expansion 11 projecting inwards and a yoke base 12 arranged outside with respect to the central axis C of the ferromagnetic core 10. The laminations of each laminated segment S₁...Si...S_{N} are joined together by means of crimpings 13.

The embodiment of the ferromagnetic core 10 described herein by way of example provides an initial layer and a terminal layer of laminations, both provided with pins engaged in corresponding slots of the adjacent lamination layers, but it is understood that the number and arrangement of the pins can also be different, as will be explained hereunder.

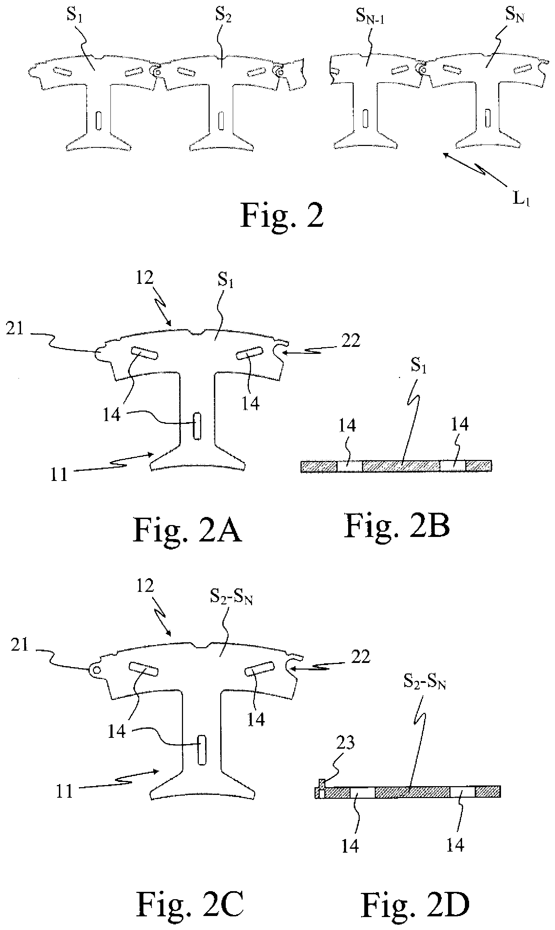

The composition of the initial layer of laminations L₁, i.e. the first layer to be formed while producing the bundle of laminations that will constitute the ferromagnetic core 10, is shown in Figure 2. As shown in Figure 2A, the lamination of the segment S₁ has a convex portion 21 at one end of the yoke base 12 and a concave portion 22 at the other end. From the view of Figure 2B, which shows a section of the yoke base 12, it can be noted that the lamination of the segment S₁ is devoid of elements projecting upwards or downwards at the convex portion 21. The layer L₁ constitutes a first auxiliary layer of laminations.

As shown in Figures 2C and 2D, the remaining laminations of the segments S₂-S_{N} in the initial layer L₁ instead have a pin 23 projecting upwards at the convex portion 21, which is obtained by punching during the blanking/stamping process.

Moreover, hollows 14, which receive the engaging of the crimpings 13 of the laminations of the second layer L₂, are obtained in the laminations of the initial layer L₁.

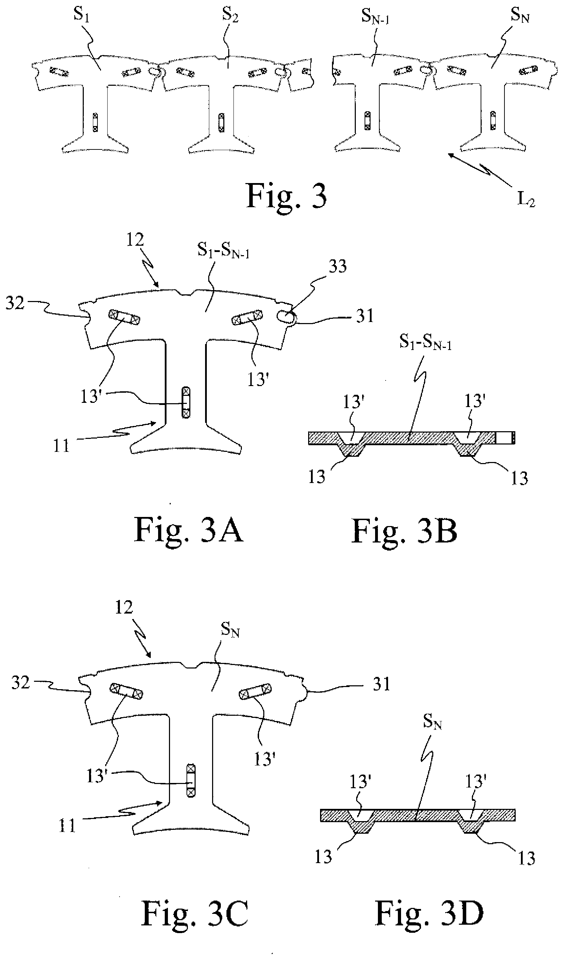

The composition of the second layer of laminations L₂ is shown in Figure 3. As shown in Figures 3A and 3B, the laminations of the segment S₁-S_{N-1} have a convex portion 31 at one end of the yoke base 12 and a concave portion 32 at the other end. A slot 33, in which the pins 23 of the laminations S₂-S_{N} of the initial layer L₁ shown in Figures 2C and 2D are engaged, is obtained at the convex portion 31 of each lamination of the segments S₁-S_{N-1}. The layer L₂ constitutes a second auxiliary layer of laminations.

As shown in Figures 3C and 3D, the lamination of the segment S_{N} in the second layer L₂ is instead devoid of slot.

Moreover crimpings 13, projecting downwards, and which are forced to be engaged with the hollows 14 of the laminations of the initial layer L₁, are obtained in the laminations of the layer L₂ by punching. Moreover, the punching forms hollows 13' in the upper part of the lamination, which will be forced to be engaged with the crimpings 13 of an overlying lamination layer.

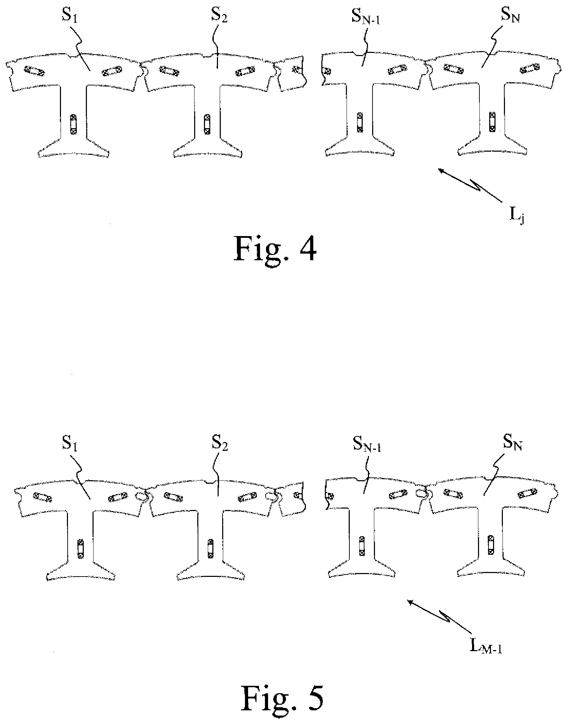

The composition of an intermediate layer of laminations Lⱼ is shown in Figure 4. The laminations of the intermediate layers Lj in all segments S1-SN are identical to those shown in Figures 3C and 3D.

The composition of the second-to-last layer of laminations L_{M-1} is shown in Figure 5. The composition is exactly identical to the one already described for the second layer L₂ of Figure 3, with the same laminations of the segments S₁-S_{N-1} depicted in Figures 3A and 3B and with the same lamination of the segment S_{N} as the one depicted in Figures 3C and 3D. The layer L_{M-1} constitutes a second auxiliary layer of laminations.

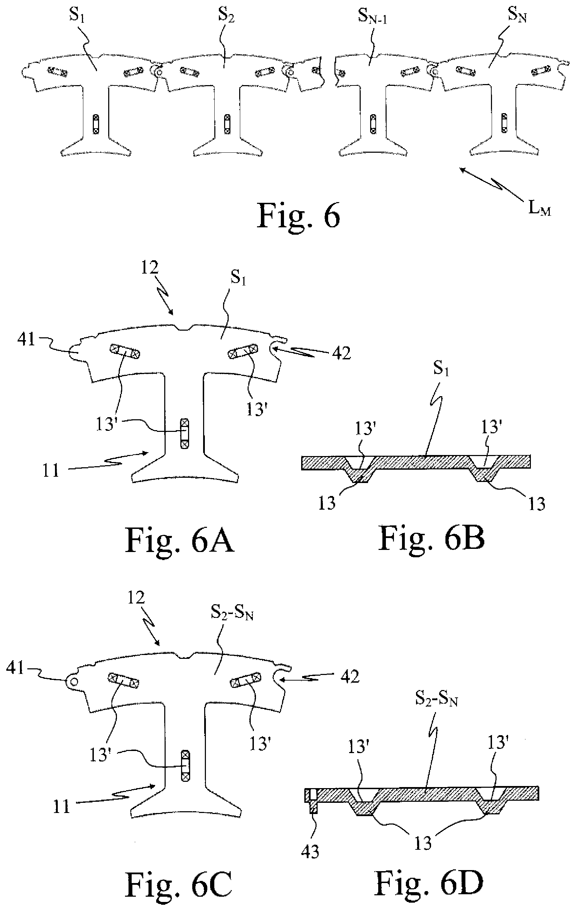

The composition of the terminal layer of laminations L_{M}, i.e. the last layer to be formed in the production of the bundle of laminations that will constitute the ferromagnetic core 10, is shown in Figure 6. As shown in Figure 6A, the lamination of the segment S₁ has a convex portion 41 at one end of the yoke base 12 and a concave portion 42 at the other end. From the view of Figure 6B, which shows a section of the yoke base 12, it can be noted that the lamination of the segment S₁ is devoid of pins projecting upwards or downwards at the convex portion 41. The layer L_{M} constitutes a first auxiliary layer of laminations.

As shown in Figures 6C and 6D, the remaining laminations of the segments S₂-S_{N} in the terminal layer L_{M} instead have a pin 43 projecting downwards at the convex portion 41, which is obtained by punching during the blanking/stamping process.

Moreover, crimpings 13, which are engaged in the hollows 13' of the laminations of the second-to-last layer L_{M-1}, are obtained in all the laminations of the terminal layer L_{M}.

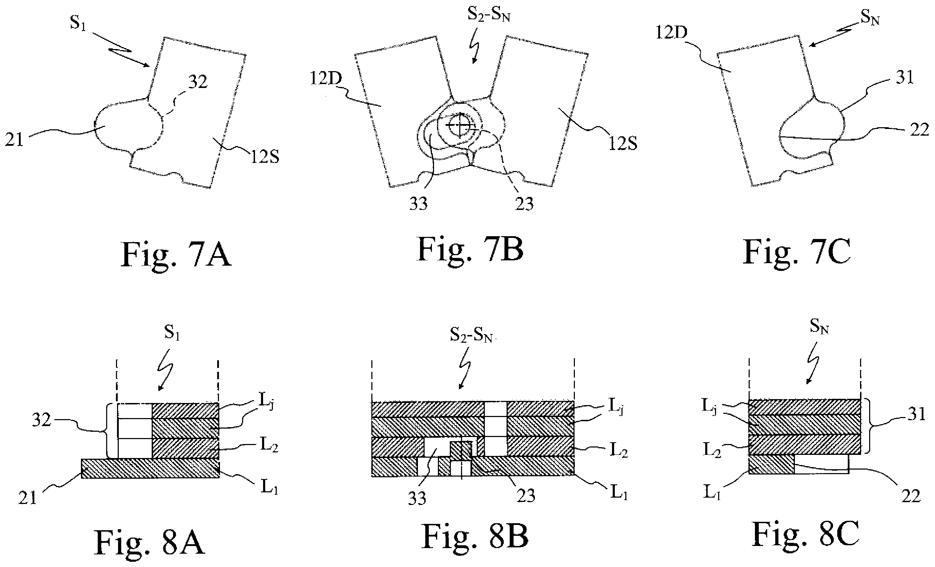

Some details of the segments S₁-S_{N} in the lower layers of laminations composing the ferromagnetic core 10 at the right 12D and left 12S ends of the yoke base 12 are shown in the bottom plan views of Figures 7A-7C and in the sectional views of the corresponding Figures 8A-8C.

The end portion of the segment S₁ is shown in Figures 7A and 8A, in which the convex portion 21 of the initial layer L₁ and the concave portions 32 of the second layer L₂ and of the successive intermediate layers Lⱼ are highlighted.

The end portion of the segments S₂-S_{N-1}, at the ends of the yoke base 12 and by means of which the rotationally coupling of the segments is achieved, is shown in Figures 7B and 8B. The pin 23 of the initial layer L₁, engaged in the slot 33 of the second layer L₂, is highlighted.

The end portion of the segment S_{N}, at one end of the yoke base 12, is shown in Figures 7C and 8C, in which the concave portion 22 of the initial layer L₁ and the convex portions 31 of the second layer L₂ and of the successive intermediate layers Lⱼ are highlighted.

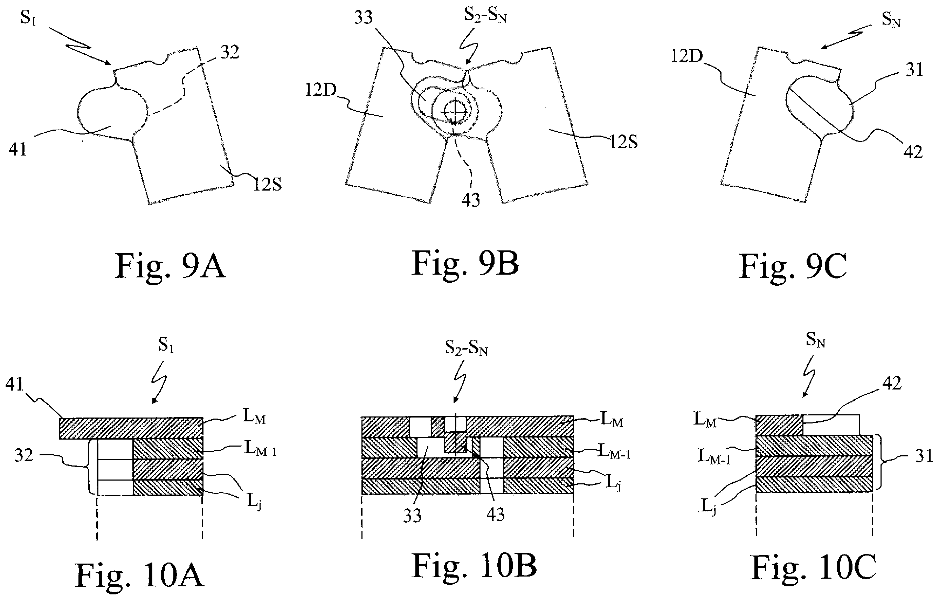

Some details of the segments S₁-S_{N} in the upper layers of laminations composing the ferromagnetic core 10 at the right 12D and left 12S ends of the yoke base 12 are shown in the top plan views of Figures 9A-9C and in the sectional views of the corresponding Figures 10A-10C.

The end portion of the segment S₁ is shown in Figures 9A and 10A, in which the convex portion 41 of the terminal layer L_{M} and the concave portions 32 of the second-to-last layer L_{M-1} and of the underlying intermediate layers Lⱼ are highlighted. The end portion of the segments S₂-S_{N-1}, at the ends of the yoke base 12 and by means of which the rotationally coupling of the segments is achieved, is shown in Figures 9B and 10B. The pin 23 of the terminal layer L_{M} engaged in the slot 33 of the second-to-last layer L_{M-1} is highlighted.

The end portion of the segment S_{N} at one end of the yoke base 12 is shown in Figures 9C and 10C, in which the concave portion 42 of the terminal layer L_{M} and the convex portions 31 of the second-to-last layer L_{M-1} and of the underlying intermediate layers Lⱼ are highlighted.

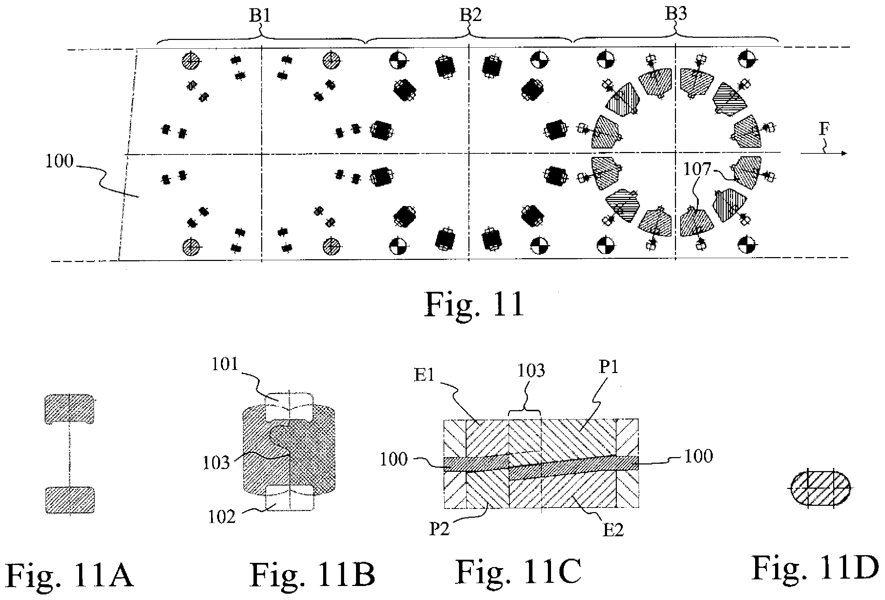

The first steps of the sequence for producing a ferromagnetic core according to the present invention, with reference to the various stations of a blanking/stamping device, are shown in Figure 11, in which a foil 100 of ferromagnetic material is fed in the direction of the arrow F. As is well known, a blanking/stamping device comprises two separate half-molds, of which at least one is movable with respect to the other, which generally extend along a sequence of blanking/stamping stations.

Hollows 101 and 102 (Fig. 11B) are blanked in couples in the first station B1, in the position in which the separating cut to separate the laminations of two adjacent segments is subsequently carried out. Figure 11A shows the shape of the portions removed from the foil 100.

The separating cuts 103 (Fig. 11B) to separate the laminations of adjacent segments are carried out in the successive station B2. The station B2 can be active or inactive since the separating cuts 103 are effected only on the laminations of the initial layer L₁ and the terminal layer L_{M}. Figure 11C is a section of the blanking/stamping device at one of the cuts 103, in which a punch P1 and an extractor E1, which are actuated in an upper half-mold, and a punch P2 and an extractor E2, which are actuated in a lower half-mold of the blanking/stamping device, can be noted.

The slots 33 of the segments S₁-S_{N-1} of the second layer L₂ and of the second-to-last layer L_{M-1} are blanked in the station B3, thus the punches that form the slots 33 in the station B3 can be selectively actuated. Instead, the punches that blank the portions of the foil 100 delimiting the segments S₁-S_{N} are always actuated in the same station B3. The shape of the portions removed to form the slots 33 are shown, on a larger scale, in Figure 11D, whereas the removed portions 107 delimiting the segments S₁-S_{N} are denoted by a sectional dotted line in the same station B3.

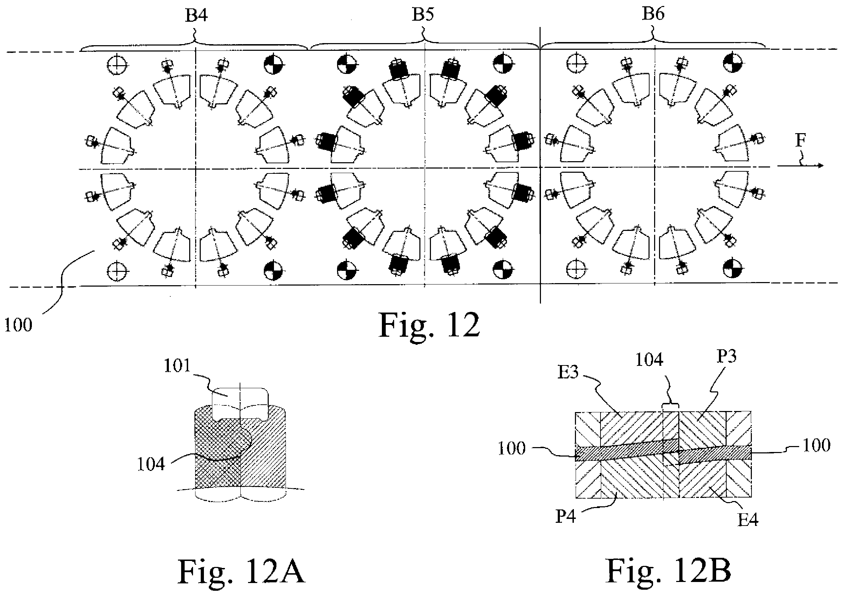

The foil 100 thus continues in the stations B4-B6 depicted in Figure 12. The station B4 is a stand-by station, in which no blanking or stamping operation is carried out in order to allow the selective actuation of the punches of the successive station B5.

The separating cuts 104 (Fig. 12A) to separate the laminations of adjacent segments are carried out in the station B5. The station B5 can be active or inactive since the separating cuts 104 are effected on the laminations S₁-S_{N} starting from the second layer L₂ then continuing with the intermediate layers Lⱼ and up to the second-to-last layer L_{M-1}. Figure 12B is a section of the blanking/stamping device at one of the cuts 104, in which a punch P3 and an extractor E3, which are actuated in an upper half-mold, and a punch P4 and an extractor E4, which are actuated in a lower half-mold of the blanking/stamping device, can be noted.

The station B6, like the station B4, is also a stand-by station, in which no blanking or stamping operation is carried out in order to allow the selective actuation of the punches of the successive stations.

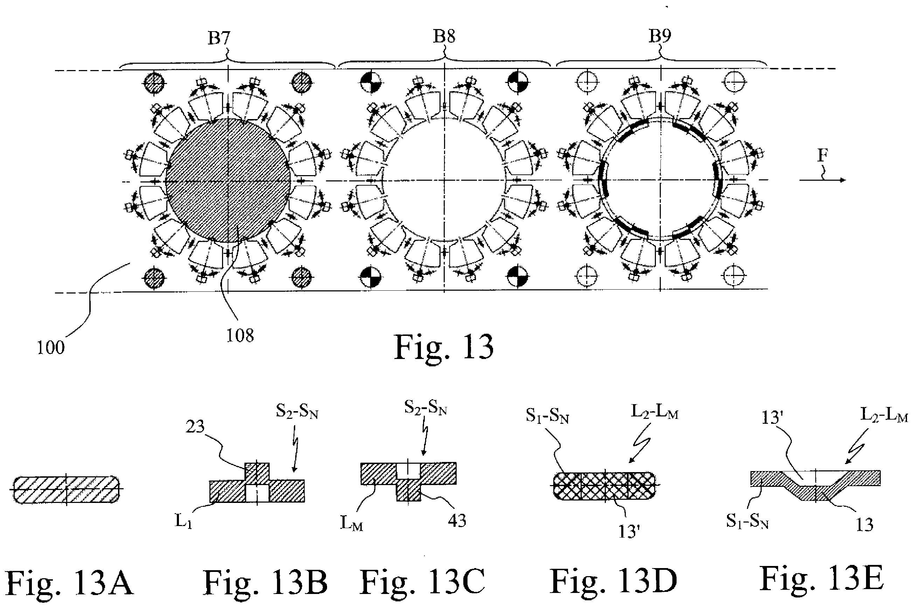

The foil 100 thus continues in the stations B7-B9 depicted in Figure 13.

The hollows 14 of the laminations of the only initial layer L₁, in which the crimpings 13 of the laminations of the second layer L₂ will be forced to be engaged, are blanked in the station B7. The shape of the blanked portions is shown in Figure 13A. The punches that carry out these blanking operations are thus only active for the laminations of the first layer L₁, which will thus constitute a separating layer to separate the ferromagnetic cores that are pushed, at the end of the sequence, into the accumulation chamber of the blanking die of the blanking/stamping device.

The central disc 108 of the lamination 100 is also blanked in the same station B7 in order to delimit the ends of the polar expansions 11 of the ferromagnetic core. The punch that carries out this blanking is thus always active.

The pins 23 (Fig. 13B) of the first layer of laminations L₁ of the segments S₂-S_{N} or, selectively, the pins 43 (Fig. 13C) of the last layer of laminations L_{M} of the segments S₂-S_{N}, are embossed in the station B8. The station B8 is thus actuatable, deactuatable or commutable.

The crimpings 13 (Fig. 13D and 13E) in all the laminations S₁-S_{N} of the layers L₂-L_{M} are punched in the station B9. As shown in Figure 13E, the stamping of the crimpings 13 by punching also forms the hollows 13' in which the crimpings of the overlying laminations will be engaged forcedly. In any case, also the station B9 comprises actuatable and deactuatable punches since only the hollows 14 must be obtained in the first layer of laminations L₁.

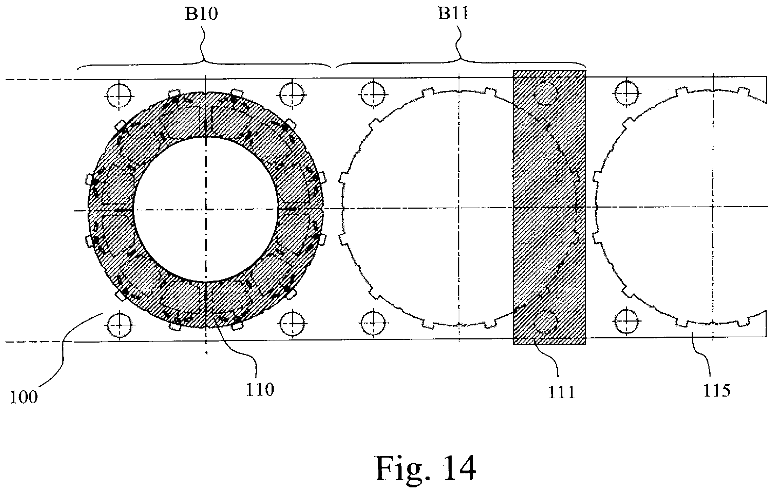

The terminal steps of the sequence for producing a ferromagnetic core according to the present invention are shown in Figure 14. Each layer of laminations 110 is blanked from the foil 100 in the station B10 and pushed into an accumulation chamber below the die of the station B10. This allows to couple by interference the crimpings 13 to the hollows 14 of the first layer L₁ or to the hollows 13' of the successive laminations and thus to form complete ferromagnetic cores, for example the one denoted by 10 in Figure 1.

For example, a cutter 111, which allows to reduce the scrap of the foil 100 in pieces 115 of small dimensions, can be provided in the station B11.

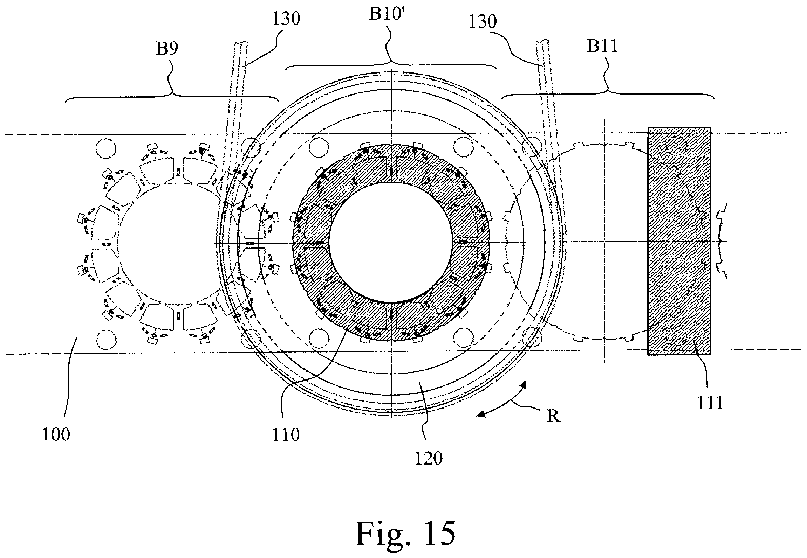

An alternative embodiment of a process according to the present invention is shown in Figure 15. The accumulation chamber below the die of the station B10' can be rotated (arrow R) by a predetermined angle at each blanking step of the layer of laminations 110. As is known, this allows to balance any difference in thickness in the cross direction that frequently occurs in the foil 100 in-between two sides.

The rotation angle depends on the number N of segments that form the ferromagnetic core 10 and is an appropriate N-th fraction of the perigon. For example, in the embodiment depicted herein, in which the ferromagnetic core 10 consists of twelve segments, the rotation angle imparted to the accumulation chamber can be at minimum 30°, i.e. 2π/N, but can also be 60° (2π*2/N), 90° (2π*3/N) etc., so that each segment of the blanked lamination 110 couples correctly with each segment of a lamination being immediately below in the accumulation chamber.

The rotation movement of the accumulation chamber in the station B10' can be imparted for example by a motor (not shown) which transmits the rotation motion to a pulley 120 through a toothed belt 130, or anyhow with any transmission system able to ensure the necessary positioning precision of the accumulation chamber in the station B10' in which the final blanking of each layer of laminations 110 occurs.

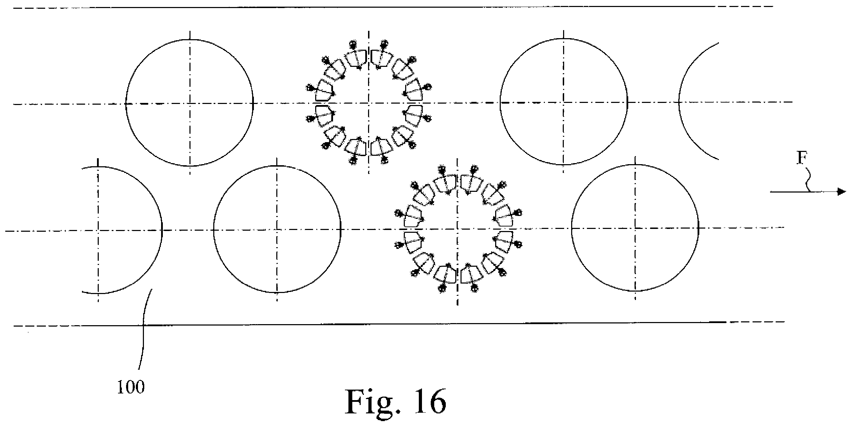

An embodiment of the process according to the invention, in which the blanking of the foil 100 occurs along two rows, with staggered stations of the same blanking/stamping device, is schematically shown in Figure 16. This embodiment can be adopted for example for productiveness reasons, simultaneously limiting the scraps obtained as processing residue of the foil 100. The blanking of the foil 100 can anyhow also be carried out along a greater number of rows, i.e. along three or more rows, on the same foil 100 with an appropriate staggered positioning of the blanking, punching and/or stamping stations of the blanking/stamping device along the adjacent rows in order to limit scraps as much as possible.

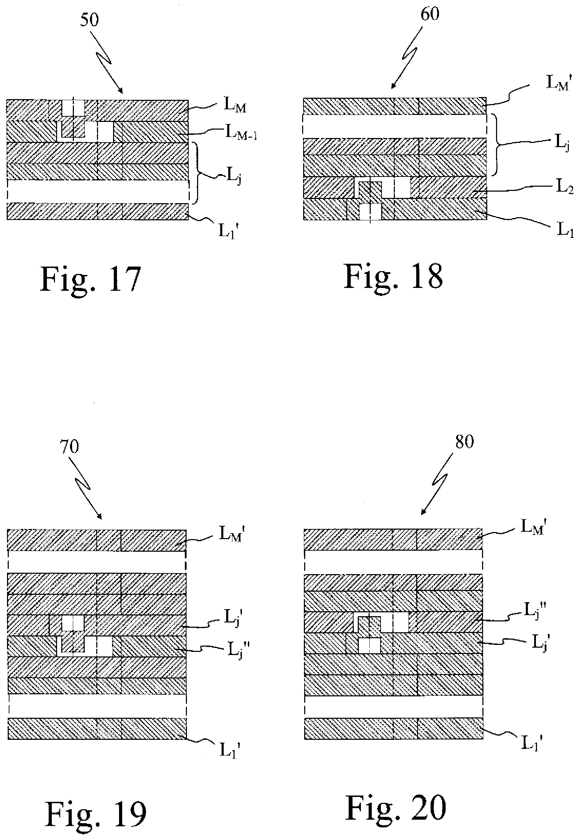

Other embodiments of a ferromagnetic core not part of the present invention are depicted in Figures 17 to 20.

For example, a ferromagnetic core 50 as the one depicted in Figure 17 can comprise only one first auxiliary layer of laminations, corresponding to the terminal layer L_{M} of the ferromagnetic core 10 described up to now, and only one second auxiliary layer of laminations corresponding to the layer L_{M-1}. The initial layer L₁' can be made similarly to the initial layer L₁ but without the pin 23, whereas the intermediate layers Lⱼ are the same as those of the ferromagnetic core 10.

In the same way, a ferromagnetic core 60 as the one depicted in Figure 18 can comprise only one first auxiliary layer of laminations, corresponding to the initial layer L₁ of the ferromagnetic core 10, and only one second auxiliary layer of laminations corresponding to the layer L₂. The terminal layer L_{M}' can be made similarly to the terminal layer L_{M} but without the pin 43, whereas the intermediate layers Lⱼ are the same as those of the ferromagnetic core 10.

The ferromagnetic core 70 in Figure 19 instead comprises a first auxiliary layer Lⱼ' and a second auxiliary layer Lⱼ" as intermediate layers of the bundle of laminations that form the ferromagnetic core. In this embodiment, the initial layer of laminations L1' is identical to that of the ferromagnetic core 50 of Figure 17 and the terminal layer of laminations LM' is identical to that of the ferromagnetic core 60 of Figure 18.

The ferromagnetic core 80 depicted in Figure 20 is similar to that of Figure 19 with the auxiliary layers Lⱼ' and Lⱼ" in inverted positions.

Various modifications can be made to the embodiments depicted herein by way of example, without thereby departing from the scope of the present invention as defined by claim 1. For example, the number of first auxiliary layers and the corresponding number of second auxiliary layers in a ferromagnetic core can also be different from the one depicted up to now, for example by combining the various embodiments of the ferromagnetic cores 10, 50, 60, 70 and 80.

## Claims

1. A process for producing a ferromagnetic core (10, 110) for electric motors formed by a plurality of laminated segments (S1-SN) consisting of bundled laminations, the laminated segments (S1-SN) being joined together in a closed circular configuration during the blanking of each layer (L1-LM) of laminations in a terminal step of the sequence for producing a ferromagnetic core (10, 110), wherein each layer of laminations (110) is blanked from a foil (100) and pushed into an accumulation chamber of a blanking/stamping device, wherein each laminated segment (S1-SN) generally has the shape of an arc of a circle with a polar expansion (11) projecting inwards and a yoke base (12) arranged outside with respect to the central axis of the ferromagnetic core (10, 110), wherein the laminations of each laminated segment are joined together by crimpings (13), and wherein at least part of said laminated segments (S1-SN) is joined to an adjacent segment along said yoke bases (12) with the possibility of reciprocal rotation, the process comprising the steps of:
a) feeding a foil (100) of ferromagnetic material along blanking stations and stamping stations of a blanking/stamping device;
b) forming one or more crimpings (13) and corresponding hollows (13', 14) by punching at the laminations of each segment;
c) blanking an initial layer (L₁) of laminations in the closed circular configuration of the ferromagnetic core (10, 110) and pushing it into an accumulation chamber of the blanking die of the blanking/stamping device;
d) blanking a plurality of intermediate layers (Lⱼ) of laminations in the closed circular configuration of the ferromagnetic core (10, 110) and stacking each of said blanked intermediate layers (Lⱼ) onto an underlying lamination layer in said accumulation chamber of the blanking die by coupling the protruding crimpings (13) of each intermediate layer (Lⱼ) of laminations with the corresponding hollows (13', 14) of an underlying lamination layer,
e) blanking a terminal layer (L_{M}) of laminations in the closed circular configuration of the ferromagnetic core (10, 110) and pushing it into said accumulation chamber of the blanking die by coupling the protruding crimpings (13) of the terminal layer (L_{M}) of laminations with the corresponding hollows (13', 14) of an underlying lamination layer,
wherein said lamination layers (L₁-L_{M}) forming each of said laminated segments (S₁-S_{N}) arranged in a closed circular configuration have a concave portion (22, 32, 42) at one end of the yoke base (12) of each segment and a convex portion (21, 31, 41) at the other end of the yoke base (12) of each segment, said concave portion (22, 32, 42) and said convex portion (21, 31, 41) having mutually complementary shapes and sizes;
f) embossing a pin (23, 43) near the convex portion (21, 41) at one end of the yoke base (12) of the laminations that form each of the laminated segments (S₁-S_{N}) in at least one first auxiliary layer (L₁; L_{M}; Lⱼ') of laminations;
g) further blanking a concave portion (22, 32, 42) at the opposite end of the yoke base (12) of the laminations that form each of the laminated segments (S₁-S_{N}) in said first auxiliary layer (L₁; L_{M}; Lⱼ') of laminations; and
h) blanking an opening (33) near the convex portion (31) at one end of the yoke base (12) of the laminations that form each of the laminated segments (S₁-S_{N}) in at least one second auxiliary layer (L₂; L_{M-1}; Lⱼ") of laminations,
wherein said first auxiliary layer (L₁; L_{M}; Lⱼ') and said second auxiliary layer (L₂; L_{M-1}; Lⱼ") are consecutive layers in the bundle of laminations that form each of the laminated segments (S₁-S_{N}) of the core, and wherein said pins of the first auxiliary layer (L₁; L_{M}; Lⱼ') of laminations are engaged in said openings (33) of the second auxiliary layer (L₂; L_{M-1}; Lⱼ") of laminations.

2. The process according to claim 1, wherein said openings (33) formed in said second auxiliary layer (L₂; L_{M-1}; Lⱼ") of laminations consist of slots.

3. The process according to claim 1, wherein said first auxiliary layer of laminations (Lⱼ') and said second auxiliary layer (Lⱼ") of laminations are arranged between intermediate layers of laminations of the ferromagnetic core (10, 110) formed by a plurality of laminated segments (S₁-S_{N}) arranged in closed circular configuration.

4. The process according to claim 1, wherein said first auxiliary layer (L₁) of laminations is arranged as initial layer and said second auxiliary layer (L₂) of laminations is coupled to an intermediate layer of laminations being immediately above in the ferromagnetic core (10, 110) formed by a plurality of laminated segments (S₁-S_{N}) arranged in closed circular configuration.

5. The process according to claim 1, wherein said first auxiliary layer (L_{M}) of laminations is arranged as terminal layer of laminations and the second auxiliary layer (L_{M-1}) of laminations is coupled with an intermediate layer of laminations being immediately below in the ferromagnetic core (10, 110) formed by a plurality of laminated segments (S₁-S_{N}) arranged in closed circular configuration.

6. The process according to claim 1, wherein a plurality of first auxiliary layers coupled to a corresponding number of second auxiliary layers are formed, and wherein each of said first auxiliary layers and said second auxiliary layers are coupled to one of said intermediate layers of laminations, or to said initial layer of laminations, or else to said terminal layer of laminations.

7. The process according to claim 1, wherein said ferromagnetic core (10, 110) is the stator core of an electric motor.

## Patentansprüche

1. Verfahren zur Herstellung eines ferromagnetischen Kerns (10, 110) für Elektromotoren, der aus einer Vielzahl von laminierten Segmenten (S1-SN) gebildet ist, die aus gebündelten Lamellen gebildet sind, wobei die laminierten Segmente (S1-SN) während des Ausstanzens jeder Lamellenschicht (L1-LM) in einem Endschritt der Sequenz zur Herstellung eines ferromagnetischen Kerns (10, 110) zu einer geschlossenen kreisförmigen Konfiguration zusammengefügt werden, wobei jede Lamellenschicht (110) aus einer Folie (100) ausgestanzt und in eine Akkumulationskammer einer Stanz-/Prägevorrichtung eingebracht wird, wobei jedes laminierte Segment (S1-SN) im Allgemeinen die Form eines Kreisbogens mit einer nach innen vorspringenden Polausbildung (11) und einer außerhalb in Bezug auf die Zentralachse des ferromagnetischen Kerns (10, 110) angeordneten Jochbasis (12) aufweist, wobei die Lamellen jedes laminierten Segments durch Verprägungen (13) miteinander verbunden sind, und wobei zumindest ein Teil der laminierten Segmente (S1-SN) entlang der Jochbasen (12) mit einem benachbarten Segment unter der Möglichkeit einer gegenseitigen Rotation verbunden ist, wobei das Verfahren die folgenden Schritte umfasst:
a) Zuführen einer Folie (100) aus ferromagnetischem Material entlang Ausstanzstationen und Prägestationen einer Stanz-/Prägevorrichtung;
b) Ausbilden einer oder mehrerer Verprägungen (13) und entsprechender Vertiefungen (13', 14) durch Ausprägen in den Lamellen jedes Segments;
c) Ausstanzen einer initialen Lamellenschicht (L₁) in der geschlossenen kreisförmigen Konfiguration des ferromagnetischen Kerns (10, 110) und Einbringen derselben in eine Akkumulationskammer der Stanzmatrize der Stanz-/Prägevorrichtung;
d) Ausstanzen einer Vielzahl von intermediären Lamellenschichten (Lⱼ) in der geschlossenen kreisförmigen Konfiguration des ferromagnetischen Kerns (10, 110) und Stapeln jeder der ausgestanzten intermediären Lamellenschichten (Lⱼ) auf eine darunterliegende Lamellenschicht in der Akkumulationskammer der Stanzmatrize durch Koppeln der vorspringenden Verprägungen (13) jeder intermediären Lamellenschicht (Lⱼ) mit den entsprechenden Vertiefungen (13', 14) einer darunterliegenden Lamellenschicht;
e) Ausstanzen einer terminalen Lamellenschicht (L_{M}) in der geschlossenen kreisförmigen Konfiguration des ferromagnetischen Kerns (10, 110) und Einbringen derselben in die Akkumulationskammer der Stanzmatrize durch Koppeln der vorspringenden Verprägungen (13) der terminalen Lamellenschicht (L_{M}) mit den entsprechenden Vertiefungen (13', 14) einer darunterliegenden Lamellenschicht,
wobei die Lamellenschichten (L₁-L_{M}), die jedes der laminierten Segmente (S1-SN) bilden und in einer geschlossenen kreisförmigen Konfiguration angeordnet sind, an einem Ende der Jochbasis (12) jedes Segments einen konkaven Abschnitt (22, 32, 42) und am anderen Ende der Jochbasis (12) jedes Segments einen konvexen Abschnitt (21, 31, 41) aufweisen, wobei der konkave Abschnitt (22, 32, 42) und der konvexe Abschnitt (21, 31, 41) zueinander komplementäre Formen und Abmessungen haben;
f) Prägen eines Stiftes (23, 43) nahe dem konvexen Abschnitt (21, 41) an einem Ende der Jochbasis (12) der Lamellen, die jedes der laminierten Segmente (S₁-S_{N}) bilden, in zumindest einer ersten Hilfsschicht (L₁; L_{M}; Lⱼ') von Lamellen;
g) weiteres Ausstanzen eines konkaven Abschnitts (22, 32, 42) am gegenüberliegenden Ende der Jochbasis (12) der Lamellen, die jedes der laminierten Segmente (S1-SN) bilden, in der ersten Hilfsschicht (L₁; L_{M}; Lⱼ') von Lamellen; und
h) Ausstanzen einer Öffnung (33) nahe dem konvexen Abschnitt (31) an einem Ende der Jochbasis (12) der Lamellen, die jedes der laminierten Segmente (S₁-S_{N}) bilden, in zumindest einer zweiten Hilfsschicht (L₂; L_{M-1}; Lⱼ") von Lamellen,
wobei die erste Hilfsschicht (L₁; L_{M}; Lⱼ') und die zweite Hilfsschicht (L₂; L_{M-1}; Lⱼ") aufeinanderfolgende Schichten in dem Lamellenbündel sind, das jedes der laminierten Segmente (S₁-S_{N}) des Kerns bildet, und wobei die Stifte der ersten Hilfsschicht (L₁; L_{M}; Lⱼ') von Lamellen in die Öffnungen (33) der zweiten Hilfsschicht (L₂; L_{M-1}; Lⱼ") von Lamellen eingreifen.

2. Verfahren nach Anspruch 1, wobei die in der zweiten Hilfsschicht (L₂; L_{M-1}; Lⱼ") von Lamellen ausgebildeten Öffnungen (33) Schlitze sind.

3. Verfahren nach Anspruch 1, wobei die erste Hilfsschicht (Lj') von Lamellen und die zweite Hilfsschicht (Lⱼ") von Lamellen zwischen intermediären Lamellenschichten des ferromagnetischen Kerns (10, 110) angeordnet sind, der aus einer Vielzahl von laminierten Segmenten (S₁-S_{N}) in geschlossener kreisförmiger Konfiguration gebildet ist.

4. Verfahren nach Anspruch 1, wobei die erste Hilfsschicht (L1) von Lamellen als initiale Schicht angeordnet ist und die zweite Hilfsschicht (L2) von Lamellen mit einer unmittelbar darüberliegenden intermediären Lamellenschicht im ferromagnetischen Kern (10, 110) gekoppelt ist, der aus einer Vielzahl von laminierten Segmenten (S₁-S_{N}) in geschlossener kreisförmiger Konfiguration gebildet ist.

5. Verfahren nach Anspruch 1, wobei die erste Hilfsschicht (LM) von Lamellen als terminale Lamellenschicht angeordnet ist und die zweite Hilfsschicht (LM-1) von Lamellen mit einer unmittelbar darunterliegenden intermediären Lamellenschicht im ferromagnetischen Kern (10, 110) gekoppelt ist, der aus einer Vielzahl von laminierten Segmenten (S₁-S_{N}) in geschlossener kreisförmiger Konfiguration gebildet ist.

6. Verfahren nach Anspruch 1, wobei eine Vielzahl von ersten Hilfsschichten, die mit einer entsprechenden Anzahl von zweiten Hilfsschichten gekoppelt sind, ausgebildet wird, und wobei jede der ersten Hilfsschichten und zweiten Hilfsschichten mit einer der intermediären Lamellenschichten oder mit der initialen Lamellenschicht oder alternativ mit der terminalen Lamellenschicht gekoppelt ist.

7. Verfahren nach Anspruch 1, wobei der ferromagnetische Kern (10, 110) der Statorkern eines Elektromotors ist.

## Revendications

1. Procédé de production d'un noyau ferromagnétique (10, 110) pour moteurs électriques formés par une pluralité de segments stratifiés (S1-SN) constitués de stratifications empilées, les segments stratifiés (S1-SN) étant assemblés selon une configuration circulaire fermée lors du découpage de chaque couche (L1-LM) de stratifications dans une étape finale de la séquence de production d'un noyau ferromagnétique (10, 110), dans lequel chaque couche de stratifications (110) est découpée à partir d'une feuille (100) et poussée dans une chambre d'accumulation d'un dispositif de découpe/estampage, dans lequel chaque segment stratifié (S1-SN) a généralement la forme d'un arc de cercle avec une expansion polaire (11) faisant saillie vers l'intérieur et une base de culasse (12) disposée à l'extérieur par rapport à l'axe central du noyau ferromagnétique (10, 110), dans lequel les stratifications de chaque segment stratifié sont assemblées entre elles par des sertissages (13), et dans lequel au moins une partie desdits segments stratifiés (S1-SN) est reliée à un segment adjacent le long desdites bases de culasse (12) avec la possibilité d'une rotation réciproque, le procédé comprenant les étapes consistant à:
a) alimenter une feuille (100) de matériau ferromagnétique le long de stations de découpage et de stations d'estampage d'un dispositif de découpage/estampage ;
b) former un ou plusieurs sertissages (13) et des creux correspondants (13', 14) en poinçonnant les stratifications de chaque segment ;
c) découper une couche initiale (L₁) de stratifications dans la configuration circulaire fermée du noyau ferromagnétique (10, 110) et la pousser dans une chambre d'accumulation de la matrice de découpe du dispositif de découpe/estampage ;
d) découper une pluralité de couches intermédiaires (Lⱼ) de stratifications dans la configuration circulaire fermée du noyau ferromagnétique (10, 110) et empiler chacune desdites couches intermédiaires découpées (Lⱼ) sur une couche de stratification sous-jacente dans ladite chambre d'accumulation de la matrice de découpe en couplant les sertissages saillants (13) de chaque couche intermédiaire (Lⱼ) des stratifications aux creux correspondants (13', 14) d'une couche de stratification sous-jacente,
e) découper une couche terminale (L_{M}) de stratifications dans la configuration circulaire fermée du noyau ferromagnétique (10, 110) et la pousser dans ladite chambre d'accumulation de la matrice de découpe en couplant les sertissages saillants (13) de la couche terminale (L_{M}) de stratifications avec les creux correspondants (13', 14) d'une couche de stratification sous-jacente,
dans lequel lesdites couches de stratifications (L₁ -Lₘ) formant chacun desdits segments stratifiés (S₁ - S_{N}) disposés dans une configuration circulaire fermée ont une partie concave (22, 32, 42) à une extrémité de la base de culasse (12) de chaque segment et une partie convexe (21, 31, 41) à l'autre extrémité de la base de culasse (12) de chaque segment, ladite partie concave (22, 32, 42) et ladite partie convexe (21, 31, 41) ayant des formes et des tailles mutuellement complémentaires ;
f) embosser une broche (23, 43) près de la partie convexe (21, 41) à une extrémité de la base de culasse (12) des stratifications qui forment chacun des segments stratifiés (S₁ - S_{N}) dans au moins une première couche auxiliaire (L₁ ; L_{M} ; Lⱼ') de stratifications ;
g) découper en outre une partie concave (22, 32, 42) à l'extrémité opposée de la base de culasse (12) des stratifications qui forment chacun des segments stratifiés (S₁ - S_{N}) dans ladite première couche auxiliaire (L₁ ; L_{M} ; Lⱼ') de stratifications ; et
h) découper une ouverture (33) près de la partie convexe (31) à une extrémité de la base de culasse (12) des stratifications qui forment chacun des segments stratifiés (S₁ - S_{N}) dans au moins une deuxième couche auxiliaire (L₂ ; L_{M} ; Lⱼ") de stratifications,
dans lequel ladite première couche auxiliaire (L₁ ; L_{M} ; Lⱼ') et ladite deuxième couche auxiliaire (L₂ ; L_{M} ; Lⱼ") sont des couches consécutives dans le faisceau de stratifications qui forment chacun des segments stratifiés (S₁ - S_{N}) du noyau, et dans lequel lesdites broches de la première couche auxiliaire (L₁ ; L_{M} ; Lⱼ') de stratifications sont engagées dans lesdites ouvertures (33) de la deuxième couche auxiliaire (L₂ ; L_{M} ; Lⱼ") de stratifications.

2. Procédé selon la revendication 1, dans lequel lesdites ouvertures (33) formées dans ladite deuxième couche auxiliaire (L₂ ; L_{M} ; Lⱼ") de stratifications consistent en fentes.

3. Procédé selon la revendication 1, dans lequel ladite première couche auxiliaire de stratifications (Lⱼ') et ladite deuxième couche auxiliaire (Lⱼ") de stratifications sont disposées entre des couches intermédiaires de stratifications du noyau ferromagnétique (10, 110) formé par une pluralité de segments stratifiés (S₁ - S_{N}) disposés en configuration circulaire fermée.

4. Procédé selon la revendication 1, dans lequel ladite première couche auxiliaire (L₁) de stratifications est disposée en tant que couche initiale et ladite deuxième couche auxiliaire (L₂) de stratifications est couplée à une couche intermédiaire de stratifications située immédiatement au-dessus dans le noyau ferromagnétique (10, 110) formé par une pluralité de segments stratifiés (S₁ - S_{N}) disposés en configuration circulaire fermée.

5. Procédé selon la revendication 1, dans lequel ladite première couche auxiliaire (L_{M}) de stratifications est disposée comme couche terminale de stratifications et la deuxième couche auxiliaire (L_{M-1}) de stratifications est couplée à une couche intermédiaire de stratifications située immédiatement en dessous dans le noyau ferromagnétique (10, 110) formé par une pluralité de segments stratifiés (S₁ - S_{N}) disposés en configuration circulaire fermée.

6. Procédé selon la revendication 1, dans lequel une pluralité de premières couches auxiliaires couplées à un nombre correspondant de deuxièmes couches auxiliaires sont formées, et dans lequel chacune desdites premières couches auxiliaires et desdites deuxièmes couches auxiliaires est couplée à l'une desdites couches intermédiaires de stratifications, ou à ladite couche initiale de stratifications, ou encore à ladite couche terminale de stratifications.

7. Procédé selon la revendication 1, dans lequel ledit noyau ferromagnétique (10, 110) est le noyau statorique d'un moteur électrique.
